# EUROPEAN PATENT SPECIFICATION

(11) **EP 1 145 993 B1**
(45) Date of publication and mention of the grant of the patent: **26.04.2006**
(21) Application number: 01102870.1
(22) Date of filing: 14.02.2001
(51) Int. Cl.: B65G 29/00, B65G 47/51

(54) **Apparatus for the production and/or machining of tubular parts**
Vorrichtung zur Herstellung und/oder Bearbeitung von Hohlkörpern
Dispositif pour la production et/ou usinage de pièces tubulaires

(30) Priority: 11.04.2000 IT MI000779
(43) Date of publication of application: 17.10.2001
(73) Proprietor: Martinenghi S.r.l., 20100 Milan (IT)
(72) Inventor: Vailati, Flavio, 24040 Fornovo S.Giovanni (BG) (IT)
(74) Representative: Marietti, Giuseppe

(56) References cited:
- EP-A- 0 411 851
- US-A- 4 511 027
- US-A- 4 697 691

## Description

The present invention relates to an apparatus for mass producing and/or processing tubular objects of the type comprising a plurality of work and/or test stations, each of which is fed by means for automatically conveying the objects at a uniform velocity.

When processing tubular objects, such as containers for liquids or pastes, the known technique is to carry out the entire production cycle in such a way that each object is subject to a pre-established and constant conveying velocity, i.e. the various operations to which objects are subjected are performed at the same velocity. This permits considerable simplification of mechanics, a high level of production regularity and the prevention of excessive idle times which can have a considerable influence on production costs.

Nonetheless, some phases for processing tubular containers may require the objects to reach a different velocity in relation to the velocity of the production line. For example, devices for performing non-destructive tests on the integrity of objects usually require null velocity between the object and testing device.

Therefore, in production cycles that require the use of operating phases with different velocities to the line velocity, it is known that these devices with different velocities are not integrated with the automatic apparatus and each phase with a different velocity is performed outside the production line. This solution, which requires the use of a specific human operator, causes an increase in production times and a noteworthy increase in costs.

Alternatively, methods are known in which the device operating at a different velocity to the line velocity is added to the production cycle in the processing apparatus and is moved according to a kinematic law in which the relative velocity between the object and device is the velocity required to complete the required operation.

For example, apparatus to produce tubular containers in aluminium, such as tubes, tins or cans, which require a phase to test the tightness of the objects to be performed at null velocity, can comprise a pneumatic testing device that is moved, in relation to the production line, at the same feed velocity as the objects in order to perform this test phase.

Although guaranteeing complete automation of the production cycle, these embodiments require complex mechanics that have a high influence on the reliability and cost of the processing apparatus.

Also known are apparatuses for processing tubular objects in which the rhythm of the production line is not constant and therefore the velocity of objects varies from a first group of operating phases working at the velocity v₀ to a second group of operating phases working at velocity v₁, different from v₀. These apparatuses require the use of a kinematic uncoupling element, such as the one described in the US patent US 6.015.040, capable of decelerating or accelerating the objects transiting on two conveyors at different velocities thanks to variations, provided by this uncoupling element, in the spatial arrangement of the objects along the line.

These embodiments, in which the velocity of the objects during production is not kept constant and therefore productivity is not high, are also somewhat complex and require work stations specifically designed to operate with the various geometrical layouts of the objects during processing.

EP-A-0 411 851, in the name of KIRIN TECHNO SYSTEM CORP., discloses an apparatus according to the preamble of Claim 1. EP-A-0 411 851 also discloses a method for processing tubular objects implemented in the aforesaid apparatus.

The object of the present invention is to provide an apparatus for producing and/or processing tubular objects that solves the problems of prior art mentioned above.

Another object of the present invention is to provide an apparatus for mass producing and/or processing tubular objects that, although integrating one or more work stations operating at the velocity v₁, guarantees a different constant object -feed velocity v₀ than the aforesaid velocity v₁, and at the same time has a high level of reliability and efficiency.

Yet another object of the present invention is to provide a method for processing tubular objects that permits constant feed velocity of objects during the entire production cycle, but at the same time permits the execution of work and/or test phases that are performed at different velocities.

These and other aims are achieved by the apparatus for mass producing and/or processing tubular objects according to the independent claim 1 and the subsequent dependent claims and the method for producing and/or processing tubular objects according to Claim 11 and subsequent dependent claims.

The apparatus for mass producing and/or processing tubular objects, according to the present invention, comprises a plurality of work and/or test stations and means for automatically conveying objects at a uniform velocity v₀. The apparatus also comprises a device to convey the objects at a non-uniform velocity positioned downstream of at least one means to convey objects at a uniform velocity v₀ and functionally associated with a work and/or test station operating on objects at a different velocity v₁ than the uniform velocity v₀. The conveyor device imposes the velocity v₁ on the tubular objects at the work and/or test station and unloads the objects, exiting from the work and/or test station, onto a means for conveying the objects at a uniform velocity v₀, positioned downstream of the conveyor device with non-uniform velocity.

Said conveyor device has two arms that rotate around their median point equipped at the respective ends with means to receive and hold the tubular objects. These rotating arms are operated individually and governed by control means that establish the respective laws of motion.

According to a particular aspect of the present invention, the velocity v₁ is null.

According to another aspect of the present invention, the tubular objects are cylindrical containers and the pre-established work and/or test station can be a device to perform tightness tests on these containers.

In another embodiment of the present invention, the means to receive and hold the tubular objects are mounted in a removable manner on the rotating arms and comprise a holding device that creates a vacuum.

A description of a preferred embodiment of the present invention is given below as a purely exemplary and non-limiting example, with the aid of the annexed figures, in which:
figure 1 is a schematic side view of a preferred embodiment of the present invention;
figure 2 is a scrap front view of a conveyor device with non-uniform velocity according to a particular aspect of the present invention;
figure 3 is a perspective view of a means to receive and hold the tubular objects which may be provided on the conveyor device of the previous figures;
figure 4 is a scrap front view of the apparatus for producing and/or processing tubular objects of the previous figures;
figure 5 is a scrap side view of the test station associated with the conveyor device, according to the present invention, of the previous figures;
figure 6 is an ideal velocity - time diagram of the law of motion to which one of the rotating arms of the conveyor device is subjected, according to a preferred aspect of the present invention.

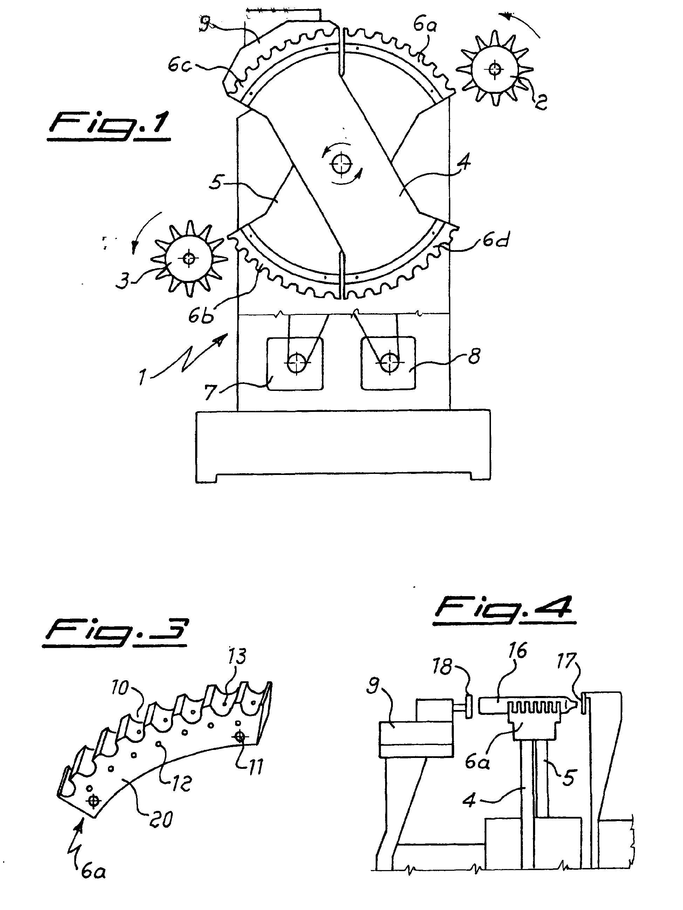

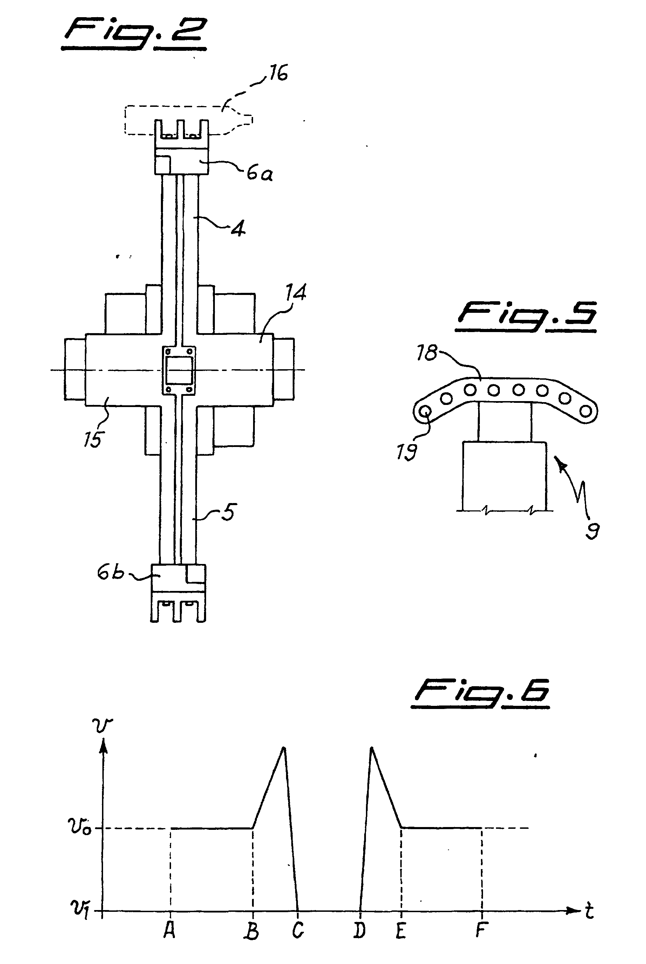

Figures 1 and 2 partly show an apparatus for mass processing tubular objects 16, in particular aluminium tubes to contain pastes, comprising a plurality of work and/or test stations (not shown) fed by means to convey the objects at a uniform velocity v₀, of which two circular conveyors 2 and 3 are shown in the figure. The apparatus also comprises a station 9 to test the tightness of objects and a conveyor device 1, to feed this station 9, positioned downstream of the circular conveyor 2 and upstream of the conveyor 1 respectively. In particular, the test station 9, operating in association with the conveyor 1, requires the relative velocity between the tubes 16 and its sensors or test terminals to be null.

The conveyor device 1, which permits the tubes 16 to be conveyed at non-uniform velocity, comprises two arms 4, 5 rotating in relation to their median point and equipped, at their ends, with means to receive and hold the tubes 6a, 6b, 6c, 6d. The rotating arms 4, 5 can be activated separately by motor means 7, 8, such as, for example, brushless electric motors coupled with toothed pulleys to the hubs 14, 15 of the two arms 4, 5, in turn governed by automatic control means (not shown). Alternatively, the two arms 4 and 5 can be operated jointly by one motor and the law of motion that the arms 4, 5 must follow can be implemented without the use of automatic control means using mechanical devices (cams and followers).

The circular conveyors 2, 3 and the conveyor device 1 must guarantee a uniform mean feed velocity v₀ to the tubes 16 being processed. This velocity v₀ is the feed velocity of the tubular objects 16 to be maintained constant along the entire production line, namely the velocity of the objects 16 during processing which allows a constant and pre-established production rate to be maintained.

As the station 9 to test the tightness of the tubes 16 is fixed to the ground and requires the relative velocity between the tubular objects 16 and test parts to be null, in order to maintain a uniform velocity v₀ of the line and obtain a null velocity of the objects at the station 9, the conveyor 1 must impose a non-uniform velocity on the conveyed tubes 16 along the path pertaining to it, although the mean velocity of these tubes 16 in the conveyor 1 must remain constant and equivalent to v₀.

Consequently, the conveyor device 1, receives the tubes 16 from the conveyor 2 positioned upstream at the velocity v₀, it then accelerates them and stops them to impose a null velocity v₁ on them at the device 9, and subsequently causes the tubes 16 accelerate and decelerate again until reaching the velocity v₀ with which it unloads the tubes 16 onto the conveyor positioned downstream. The temporal intervals of the various phases at variable velocity are designed to guarantee that each tube 16 maintains constant its mean velocity v₀. Moreover, continual feed of the tubes 16 is achieved thanks to the particular geometry and structure of the conveyor 1.

In this way, by accelerating and decelerating the tubes 16 appropriately and guaranteeing continuity in their flow, it is possible to maintain an unvaried mean conveying velocity v₀ along the entire path covered by the conveyor device 1 and prevent halts or slowing down in the production cycle.

In particular, the use of two arms 4, 5 capable of conveying a finite and limited number of tubes 16 per cycle and the particular law of motion to which these are subjected, allows the device 1, as will be described in greater detail below, to guarantee maintenance of the chosen production rate given by the feed velocity v₀ of the tubes 16.

With reference also to figure 3, each of the means 6a, 6b, 6c, 6d to receive and hold the tubes 16 comprises a shaped container 20 suitable to receive only a limited number of tubes 16 and mounted in a removable manner on the ends of the arms 4, 5 by means of removable fixing elements 11, for example, of the screw and nut screw type. Removable mounting of the containers 20 consents their rapid replacement when, owing to variation in the dimensions of the tubes 16 being processed, the shape and dimensions of the containers 20 require to be modified.

Each container 20 also has concave seats 10, inside which the tubes 16 are housed individually, and outlets 13 positioned at the minimum point of each concave seat 10. These outlets 13 have a fluid connection with holes 12, provided in the side wall of each container 20, which in turn have a fluid connection, by means of flexible piping, with means to create a vacuum, not shown. The outlets 13 thus perform the function of holding the tubes 16 in their seats during the acceleration and deceleration phases of the arms 4, 5.

Alternatively, to process metal tubes, in place of the aforesaid pneumatic means to create a vacuum, the containers 20 can be provided with magnetic means, which can be operated electrically, to hold the tubes 16 in the correct position.

Figures 4 and 5 schematically illustrate some parts of the station 9 to test the tightness of tubes 16. In particular, the station 9 comprises a head 18 equipped with an equivalent number of nozzles 19 to the number of seats 10 provided on the containers 20 of the means 6a, 6b, 6c, 6d. The station 9 can also be equipped with a closing element 17 for tubes, provided with suitable seal pads, which approach the tubes 16 in an essentially axial manner during the tightness test to guarantee correct execution of the test. This closing element 17 is required when testing the tightness of tubes or other cylindrical containers with holes at both ends.

The test station 9 can also be equipped with a device (not shown) to expel any non-complying objects 16 before these non-complying objects are unloaded by the conveyor 1 onto the subsequent conveyor 3.

Alternatively, the test station 9 can be connected to and govern operation of a device to expel the non-complying objects positioned on the subsequent conveyor 3, or on any other conveying means positioned downstream of the conveyor 1.

With reference to figure 6, a preferred operating method of the apparatus represented in the previous figures will be illustrated, relating to the processing cycle required for correct execution of the operations performed by the station 9, or requiring a different velocity v₁ from the cycle velocity v₀ and particularly requiring a null velocity v₁.

During operation of the apparatus, a first rotating arm, for example arm 4, repeats the subsequent phases in succession:
- firstly, point A of the diagram in figure 6, the arm 4 is positioned so that the seats 10 of the means 6c to receive and hold the tubes 16 gradually come in correspondence with the conveyor 2. In this phase, the arm 4 rotates with tangential velocity v₀ equivalent to the conveying velocity of the objects 16 in the conveyor 2 to allow the objects 16 to be housed correctly in the seats 10:
- subsequently, when the container 20 of fhe means 6c has been filled (point B in the diagram in figure 6), the arm 4 accelerates significantly and stops (point C) at the test station 9;
- the arm 4 remains at a standstill for an interval of time C-D required to perform the tightness test at null velocity v₁ at the station 9;
- after the test has been performed and any non-complying objects 16 have been expelled, the arm 4 once again accelerates and decelerates until again reaching the velocity v₀ (point E in the diagram), when the means 6c come in correspondence with the conveyor 3 positioned downstream;
- lastly, at point F in the diagram, the means 6c of the arm 4 have terminated their unloading phase and must be returned in line with the conveyor 2.

While the means 6c are in the phase defined by point E-F, the means 6d confined at the other end of the arm 4, therefore diametrically opposite the means 6c, will be in the phase A-B described above, to collect tubes 16 from the conveyor.

Consequently, the means 6d will follow the succession of phases indicated above while the means 6c will return, empty, towards the conveyor 2, therefore towards the phase A-B, which these means 6c will reach when the diametrically opposite means 6d are, in turn, in the unloading phase E-F.

Moreover, to guarantee continual feed of the objects 16 from the conveyor 2 upstream to the conveyor 3 downstream, the other arm 5, which follows the same law of motion described for the arm 4, will have its own means 6a, 6b to receive and hold the tubes 16 involved in the loading and unloading phases, A-B and E-F respectively, during the acceleration, deceleration, pause and new acceleration and deceleration phases, identified in the diagram in figure 6 by the interval B-E. of the other arm 4. In this respect, the time for loading A-B or unloading E-F must essentially coincide with the interval of time B-E.

The use of a conveyor with non-uniform velocity in an apparatus to process tubular objects, as described above, permits the use, without the need for complex and costly mechanical structures, of work stations that require different velocities v₁ from the constant feed velocity v₀ of the objects in the processing line, thus guaranteeing high productive rhythms and noteworthy reliability of the apparatus.

## Claims

1. Apparatus for mass producing and/or processing tubular objects (16) of the type comprising a plurality of work and/or test stations, conveyor means (2, 3) for automatically conveying the tubular objects at a pre-established uniform velocity v₀, and at least one conveyor device (1) to convey the objects at a non-uniform velocity, at least one of said conveyor means (2) being positioned upstream of said conveyor device (1) and at least one of said conveyor means (3) being positioned downstream of said conveyor device (1), said conveyor device (1) being operating in association with at least one pre-established work and/or test station (9) which operates on the tubular objects (16) at a second velocity v₁ differing from said pre-established uniform velocity v₀, the apparatus further comprising motor means and control means such that said conveyor device (1) receives the tubular objects from the upstream conveyor means (2), accelerates and/or decelerates said tubular objects to impose said velocity v₁ at said station (9), and subsequently decelerates and/or accelerates said tubular objects to impose said velocity v₀ with which the conveyor device (1) unloads the tubular objects (16) onto the downstream conveyor means (3), **characterised in that** said conveyor device (1) includes two arms (4, 5) rotating in relation to their median point and equipped at their respective ends with means (6a, 6b, 6c, 6d) to receive and hold said tubular objects (16); said motor means (7, 8) activating separately said two arms (4, 5).

2. Apparatus as claimed in claim 1, **characterised in that** said motor means and said control means impose that the mean velocity of the objects (16) in said conveyor device (1) is equal to said velocity v₀.

3. Apparatus as claimed in claims 1 or 2, **characterised in that** said second velocity v₁ is null.

4. Apparatus as claimed in any of the preceding claims, **characterised in that** said tubular objects (16) are cylindrical containers.

5. Apparatus as claimed in claim 4, **characterised in that** said pre-established work and/or test station (9) is a device to perform tightness tests on said tubular containers.

6. Apparatus as claimed in claim 5, **characterised in that** said device (9) to perform tightness tests comprises means to expel defective or non-complying objects before they are unloaded by said conveyor device (1).

7. Apparatus according to anyone of the preceding claims, **characterised in that** said means (6a, 6b, 6c, 6d) to receive and hold the tubular objects are mounted in a removable manner on the end(s) of said arm(s) (4, 5).

8. Apparatus according to anyone of the preceding claims, **characterised in that** said means (6a, 6b, 6c, 6d) to receive and hold the tubular objects comprise a device to create a vacuum to hold said tubular objects.

9. Apparatus according to anyone of the preceding claims, **characterised in that** said means (6a, 6b, 6c, 6d) to receive and hold the tubular objects comprise magnetic holding means.

10. Apparatus according to anyone of the preceding claims **characterised in that** each of said means (6a, 6b, 6c, 6d) to receive and hold the tubular objects comprises a container (20) for a finite number of said tubular objects (16).

11. Method for mass producing and/or processing tubular objects (16) in an apparatus according to anyone of the preceding claims, the method comprising a series of work and/or test phases in which said tubular objects (16) are moved at a pre-established uniform velocity v₀ and at least one work and/or test phase in which said tubular objects are moved at a different velocity v₁, said phase at a different velocity v₁ being positioned downstream of at least one phase at uniform velocity v₀, and upstream of at least one other phase at uniform velocity v₀, **characterised in that** each one of said two rotating arms (4, 5) performs separately the following phases:
- receiving said tubular objects (16) from the upstream phase at uniform velocity v₀;
- accelerating and/or decelerating the tubular objects (16) until they reach said velocity v₁, before entering said phase at velocity v₁;
- moving the tubular objects (16) at said different velocity v₁ at said work and/or test phase at velocity v₁;
- accelerating and/or decelerating the tubular objects (16), exiting from said phase at velocity v₁, until they reach said uniform velocity v₀;
- unloading the tubular objects at the downstream phase at uniform velocity v₀;
such that the mean velocity of the tubular objects (16) remains constant (v₀) during the entire production and/or processing cycle.

12. Method as claimed in claim 11, **characterised in that** said velocity v₁ is null.

13. Method as claimed in anyone of the claims 11 or 12, **characterised in that** said phase at velocity v₁ is a non-destructive test phase on the tubular objects.

14. Method according to any of the claims from 11 to 13, in an apparatus in which each of the ends of said rotating arms (4, 5) comprises said means (6a, 6b, 6c, 6d) to receive and hold said tubular objects (16), **characterised in that** an arm (4) performs the following phases of:
- simultaneous loading and unloading of objects (16) at said uniform velocity v₀ for a first interval of time t₁;
- acceleration and/or deceleration to take the objects (16) to said velocity v₁; pause for the processing operation on the tubular objects (16) at velocity v₁; and acceleration and/or deceleration to return the objects (16) to velocity v₀; for a second interval of time t₂;
- unloading and loading of the objects (16) at velocity v₀ for said first interval of time t₁;
in which said first and second interval of time t₁, t₂ are equal,
and the other arm (5) performs the same phases with a delay equivalent to t₂, so that during said loading and unloading phase of the first arm (4), said other arm (5) performs the phase of acceleration and/or deceleration to take the objects (16) to said pause velocity v₁; for the processing operation on the tubular objects (16) at velocity v₁; and of acceleration and/or deceleration to return the objects (16) to velocity v₀; during said interval of time t₂.

## Patentansprüche

1. Anlage zur Massenproduktion und/oder -bearbeitung von Hohlkörpern (16) des Typs, umfassend eine Mehrzahl von Arbeits- und/oder Prüfstationen, Fördermittel (2, 3) zum automatischen Transportieren der Hohlkörper bei einer vorher festgelegten gleichförmigen Geschwindigkeit v₀ und zumindest einer Fördereinheit (1), um die Körper bei einer nicht-gleichförmigen Geschwindigkeit zu befördern, wobei zumindest eines der genannten Fördermittel (2) der genannten Fördereinheit (1) vorgeschaltet ist und zumindest eines der genannten Fördermittel (3) der genannten Fördereinheit (1) nachgeschaltet ist, wobei die genannte Fördereinheit (1) in Verbindung mit zumindest einer vorher eingerichteten Arbeits- und/oder Prüfstation (9) betrieben wird, die die Hohlkörper (16) bei einer zweiten Geschwindigkeit v₁ handhabt, die von der vorgenannten vorher festgelegten Geschwindigkeit v₀ abweicht, wobei die Anlage ferner Motorenmittel und Steuermittel dergestalt umfasst, dass die genannte Fördereinheit (1) die Hohlkörper von den vorgeschalteten Fördermitteln (2) erhält, die genannten Hohlkörper beschleunigt und/oder verlangsamt, um die genannte Geschwindigkeit v₁ an der genannten Station (9) aufzuzwingen und anschließend die genannten Hohlkörper zu verlangsamen und/oder zu beschleunigen, um die genannte Geschwindigkeit v₀ aufzuzwingen, mit der die Fördereinheit (1) die Hohlkörper (16) an die nachgeschalteten Fördermittel (3) abgibt, **dadurch gekennzeichnet, dass** die genannte Fördereinheit (1) zwei Schenkel (4, 5) umfasst, die bezüglich ihres Mittelpunktes rotieren und an ihren jeweiligen Enden mit Mitteln (6a, 6b, 6c, 6d) ausgestattet sind, um die genannten Hohlkörper (16) aufzunehmen und zu halten, wobei die genannten Motormittel (7, 8) die genannten beiden Schenkel (4, 5) getrennt voneinander aktivieren.

2. Anlage wie in Anspruch 1 beansprucht, **dadurch gekennzeichnet, dass** die genannten Motormittel und die genannten Steuermittel bewirken, dass die mittlere Geschwindigkeit der Körper (16) in der genannten Fördereinheit (1) gleich der genannten Geschwindigkeit v₀ ist.

3. Anlage wie in Anspruch 1 oder 2 beansprucht, **dadurch gekennzeichnet, dass** die genannte zweite Geschwindigkeit v₁ gleich null ist.

4. Anlage wie in irgendeinem der vorhergehenden Ansprüche beansprucht, **dadurch gekennzeichnet, dass** die genannten Hohlkörper (16) zylinderförmige Behälter sind.

5. Anlage wie in Anspruch 4 beansprucht, **dadurch gekennzeichnet, dass** die genannte vorher eingerichtete Arbeits- und/oder Prüfstation (9) eine Einrichtung ist, um Dichtigkeitsprüfungen an den genannten zylinderförmigen Behältern auszuführen.

6. Anlage wie in Anspruch 5 beansprucht, **dadurch gekennzeichnet, dass** die genannte Einrichtung (9) zur Durchführung von Dichtigkeitsprüfungen Mittel umfasst, um fehlerhafte oder nicht-standardgemäße Körper auszusondern, bevor sie von der genannten Fördereinheit (1) abgegeben werden.

7. Anlage nach irgendeinem der vorhergehenden Ansprüche, **dadurch gekennzeichnet, dass** die genannten Mittel (6a, 6b, 6c, 6d) zum Aufnehmen und Halten der Hohlkörper in abnehmbarer Weise an dem Ende/den Enden des/der genannten Schenkel(s) (4, 5) angebracht sind.

8. Anlage nach irgendeinem der vorhergehenden Ansprüche, **dadurch gekennzeichnet, dass** die genannten Mittel (6a, 6b, 6c, 6d) zum Aufnehmen und Halten der Hohlkörper eine Vorrichtung zum Erzeugen eines Vakuums umfassen, um die genannten Hohlkörper zu halten.

9. Anlage nach irgendeinem der vorhergehenden Ansprüche, **dadurch gekennzeichnet, dass** die genannten Mittel (6a, 6b, 6c, 6d) zum Aufnehmen und Halten der Hohlkörper magnetische Haltemittel umfassen.

10. Anlage nach irgendeinem der vorhergehenden Ansprüche, **dadurch gekennzeichnet, dass** die genannten Mittel (6a, 6b, 6c, 6d) zum Aufnehmen und Halten der Hohlkörper einen Behälter (20) für eine begrenzte Anzahl der genannten Hohlkörper (16) umfassen.

11. Verfahren zur Massenproduktion und/oder -bearbeitung von Hohlkörpern (16) in einer Anlage nach irgendeinem der vorhergehenden Ansprüche, wobei das Verfahren eine Reihe von Arbeits- und/oder Prüfphasen umfasst, in denen die genannten Hohlkörper (16) bei einer vorher festgelegten Geschwindigkeit v₀ bewegt werden und zumindest eine Arbeits- und/oder Prüfphase enthält, in der die genannten Hohlkörper bei einer verschiedenen Geschwindigkeit v₁ bewegt werden, wobei die genannte Phase, in der die Hohlkörper bei einer verschiedenen Geschwindigkeit v₁ bewegt werden, zumindest einer Phase mit gleichförmiger Geschwindigkeit v₀ nachgeschaltet und zumindest einer weiteren Phase mit gleichförmiger Geschwindigkeit v₀ vorgeschaltet ist, **dadurch gekennzeichnet, dass** jeder der genannten zwei Drehschenkel (4, 5) separat die folgenden Phasen ausführt:
- Aufnehmen des genannten Hohlkörpers (16) aus der vorgeschalteten Phase mit gleichförmiger Geschwindigkeit v₀;
- Beschleunigen und/oder Verlangsamen der Hohlkörper (16) bis sie die genannte Geschwindigkeit v₁ erreichen, bevor sie in die genannte Phase bei der Geschwindigkeit v₁ eintreten;
- Bewegen der Hohlkörper (16) bei der genannten verschiedenen Geschwindigkeit v₁ an der genannten Arbeits- und/oder Prüfstation mit der Geschwindigkeit v₁;
- Beschleunigen und/oder Verlangsamen der Hohlkörper (16), die die genannte Phase mit der Geschwindigkeit v₁ verlassen, bis sie die genannte gleichförmige Geschwindigkeit v₀ erreichen;
- Abgabe der Hohlkörper an die nachgeschaltete Phase bei der gleichförmigen Geschwindigkeit v₀;
dergestalt, dass die mittlere Geschwindigkeit der Hohlkörper (16) während des gesamten Produktions- und/oder Bearbeitungszyklus konstant (v₀) bleibt.

12. Verfahren wie in Anspruch 11 beansprucht, **dadurch gekennzeichnet, dass** die genannte Geschwindigkeit v₁ gleich null ist.

13. Verfahren wie in irgendeinem der Ansprüche 12 oder 13 beansprucht, **dadurch gekennzeichnet, dass** die genannte Phase bei der Geschwindigkeit v₁ eine Phase der zerstörungsfreien Prüfung der Hohlkörper ist.

14. Verfahren nach irgendeinem der Ansprüche 11 bis 13 in einer Anlage, bei der jedes der Enden der genannten Drehschenkel (4, 5) die genannten Mittel (6a, 6b, 6c, 6d) zum Aufnehmen und Halten der genannten Hohlkörper (16) umfasst, **dadurch gekennzeichnet, dass** ein Schenkel (4) die folgenden Phasen ausführt:
- gleichzeitiges Aufnehmen und Abgeben von Körpern (16) bei der genannten gleichförmigen Geschwindigkeit v₀ während eines ersten Zeitintervalls t₁;
- Beschleunigen und/oder Verlangsamen, um die Körper (16) auf die Geschwindigkeit v₁ zu bringen; Stillstand während des Bearbeitungsvorgangs an den Hohlkörpern (16) bei der Geschwindigkeit v₁; und Beschleunigen und/oder Verlangsamen, um die Körper (16) auf die Geschwindigkeit v₀ zurückzusetzen; während eines zweiten Zeitintervalls t₂;
- Aufnehmen und Abgeben der Körper (16) bei einer Geschwindigkeit v₀ während des genannten ersten Zeitintervalls t₁,
wobei das genannte erste und zweite Zeitintervall t₁, t₂ gleich lang sind,
und wobei der andere Schenkel (5) die gleichen Phasen mit einer Verzögerung ausführt, die zu t₂ äquivalent ist, so dass während der genannten Aufnahme- und Abgabephase des ersten Schenkels (4) der genannte andere Schenkel (5) während des genannten Zeitintervalls t₂. die Beschleunigungs- und/oder Verlangsamungsphase zur Überführung der Körper (16) auf die genannte Stillstandsgeschwindigkeit v₁ für den Bearbeitungsvorgang an den Hohlkörpern (16) bei der Geschwindigkeit v₁ und die Beschleunigung und/oder Verlangsamung ausführt, um die Hohlkörper (16) wieder auf die Geschwindigkeit v₀ zurückzusetzen.

## Revendications

1. Dispositif pour la production en grande série et/ou le traitement d'objets tubulaires (16), du type comprenant une pluralité de postes de travail et/ou de test, des moyens de transport (2, 3) pour transporter automatiquement les objets tubulaires à une vitesse uniforme prédéfinie v₀, et au moins un dispositif de transport (1) pour transporter les objets à une vitesse non uniforme, au moins un desdits moyens de transport (2) étant positionné en amont dudit dispositif de transport (1) et au moins un desdits moyens de transport (3) étant positionné en aval dudit dispositif de transport (1), ledit dispositif de transport (1) fonctionnant en association avec au moins un poste de travail et/ou de test prédéfini (9) qui intervient sur les objets tubulaires (16) à une seconde vitesse v₁ différente de ladite vitesse uniforme prédéfinie v₀, le dispositif comprenant en outre des moyens de motorisation et des moyens de commande prévus de telle manière que ledit dispositif de transport (1) reçoit les objets tubulaires depuis les moyens de transport situés en amont (2), accélère et/ou décélère lesdits objets tubulaires de manière à imposer ladite vitesse v₁ au niveau dudit poste (9), et décélère et/ou accélère ensuite lesdits objets tubulaires afin d'imposer ladite vitesse v₀ à laquelle le dispositif de transport (1) décharge les objets tubulaires (16) sur les moyens de transport situés en aval (3), **caractérisé en ce que** le dispositif de transport (1) comprend deux bras (4, 5) tournant par rapport à leur point central et équipés à leurs extrémités respectives de moyens (6a, 6b, 6c, 6d) pour recevoir et retenir lesdits objets tubulaires (16) ; lesdits moyens de motorisation (7, 8) activant lesdits deux bras (4, 5) séparément.

2. Dispositif selon la revendication 1, **caractérisé en ce que** lesdits moyens de motorisation et lesdits moyens de commande imposent que la vitesse moyenne des objets (16) dans ledit dispositif de transport (1) soit égale à ladite vitesse v₀.

3. Dispositif selon les revendications 1 ou 2, **caractérisé en ce que** ladite seconde vitesse v₁ est nulle.

4. Dispositif selon l'une quelconque des revendications précédentes, **caractérisé en ce que** lesdits objets tubulaires (16) sont des récipients cylindriques.

5. Dispositif selon la revendication 4, **caractérisé en ce que** ledit poste de travail et/ou de test prédéfini (9) est un dispositif pour effectuer des tests d'étanchéité sur lesdits récipients tubulaires.

6. Dispositif selon la revendication 5, **caractérisé en ce que** ledit dispositif (9) pour effectuer des tests d'étanchéité comprend des moyens pour expulser les objets défectueux ou non conformes avant qu'ils ne soient déchargés par ledit dispositif de transport (1).

7. Dispositif selon l'une quelconque des revendications précédentes, **caractérisé en ce que** lesdits moyens (6a, 6b, 6c, 6d) pour recevoir et retenir les objets tubulaires sont montés de manière amovible à ou aux extrémités dudit ou desdits bras (4, 5).

8. Dispositif selon l'une quelconque des revendications précédentes, **caractérisé en ce que** lesdits moyens (6a, 6b, 6c, 6d) pour recevoir et retenir les objets tubulaires comprennent un dispositif pour créer une dépression afin de retenir lesdits objets tubulaires.

9. Dispositif selon l'une quelconque des revendications précédentes, **caractérisé en ce que** lesdits moyens (6a, 6b, 6c, 6d) pour recevoir et retenir les objets tubulaires sont constitués par des moyens de retenue magnétiques.

10. Dispositif selon l'une quelconque des revendications précédentes, **caractérisé en ce que** chacun desdits moyens (6a, 6b, 6c, 6d) pour recevoir et retenir les objets tubulaires est constitué par un réceptacle (20) prévu pour une quantité finie desdits objets tubulaires (16).

11. Procédé pour la production en série et/ou le traitement d'objets tubulaires (16) dans un dispositif conforme à l'une quelconque des revendications précédentes, le procédé comprenant une série de phases de travail et/ou de test pendant lesquelles lesdits objets tubulaires (16) sont déplacés à une vitesse uniforme prédéfinie v₀ et au moins une phase de travail et/ou de test pendant laquelle lesdits objets tubulaires sont déplacés à une vitesse différente v₁, ladite phase de vitesse différente v₁ étant positionnée en aval d'au moins une phase de vitesse uniforme v₀, et en amont d'au moins une autre phase de vitesse uniforme v₀, **caractérisé en ce que** chacun desdits deux bras rotatifs (4, 5) effectue les phases suivantes séparément :
- recevoir lesdits objets tubulaires (16) depuis la phase amont à une vitesse uniforme v₀ ;
- accélérer et/ou déceler les objets tubulaires (16) jusqu'à ce qu'ils atteignent ladite vitesse v₁, avant de pénétrer dans ladite phase de vitesse v₁ ;
- déplacer les objets tubulaires (16) à ladite vitesse différente v₁ pendant ladite phase de travail et/ou de test de vitesse v₁ ;
- accélérer et/ou décélérer les objets tubulaires (16), sortant de ladite phase de vitesse v₁, jusqu'à ce qu'ils atteignent ladite vitesse uniforme v₀ ;
- décharger les objets tubulaires dans la phase aval de vitesse uniforme v₀ ;
de telle manière que la vitesse moyenne des objets tubulaires (16) reste constante (v₀) pendant la totalité du cycle de production et/ou de traitement.

12. Procédé selon la revendication 11, **caractérisé en ce que** ladite vitesse v₁ est nulle.

13. Procédé selon l'une quelconque des revendications 11 ou 12, **caractérisé en ce que** la dite phase de vitesse v₁ est une phase de test non destructif effectué sur les objets tubulaires.

14. Procédé selon l'une quelconque des revendications 11 à 13, appliqué à un dispositif dans lequel chacune des extrémités desdits bras rotatifs (4, 5) comprend lesdits moyens (6a, 6b, 6c, 6d) pour recevoir et retenir lesdits objets tubulaires (16), **caractérisé en ce qu'**un bras (4) effectue les phases suivantes :
- charger et décharger simultanément des objets (16) à ladite vitesse uniforme v₀ pendant un premier intervalle de temps t₁ ;
- accélérer et/ou décélérer de manière à amener les objets (16) à ladite vitesse v₁ ; marquer une pause pour l'opération de traitement sur les objets tubulaires (16) à la vitesse v₁ ; et accélérer et/ou décélérer afin de ramener les objets (16) à la vitesse v₀ pendant un second intervalle de temps t₂ ;
- décharger et charger les objets (16) à la vitesse v₀ pendant ledit premier intervalle de temps t₁ ;
dans lesquelles lesdits premier et second intervalles de temps t₁ et t₂ sont égaux,
et **en ce que** l'autre bras (5) effectue les mêmes phases avec un décalage dans le temps équivalent à t₂, de manière à ce que pendant ladite phase de chargement et de déchargement du premier bras (4), ledit autre bras (5) effectue la phase d'accélération et/ou de décélération afin d'amener les objets (16) à ladite vitesse de pause v₁ pour l'opération de traitement sur les objets tubulaires (16) à la vitesse v₁ ; et d'accélération et/ou de décélération afin de ramener les objets (16) à la vitesse v₀ pendant ledit intervalle de temps t₂.
